# EUROPÄISCHE PATENTSCHRIFT

(11) **EP 3 482 440 B1**
(45) Veröffentlichungstag und Bekanntmachung des Hinweises auf die Patenterteilung: **13.05.2020**
(21) Anmeldenummer: 17740699.8
(22) Anmeldetag: 07.07.2017
(51) Int. Cl.: H01M 8/18

(54) **KAVERNEN BATTERIESPEICHER**
CAVERN BATTERY STORAGE DEVICE
RÉSERVOIR DE BATTERIE CONSTITUÉ D'UNE CAVITÉ DE STOCKAGE SOUTERRAINE

(30) Priorität: 07.07.2016 DE 102016212390
(43) Veröffentlichungstag der Anmeldung: 15.05.2019
(73) Patentinhaber: Innogy SE, 45128 Essen (DE); Innogy Gas Storage NWE GmbH, 45127 Essen (DE)
(72) Erfinder: NEUHAUS, Guido, 48249 Dülmen (DE)
(74) Vertreter: Richly & Ritschel Patentanwälte PartG mbB
(86) Internationale Anmeldenummer: PCT/EP2017/067123
(87) Internationale Veröffentlichungsnummer: WO 2018/007598

(56) Entgegenhaltungen:
- WO-A1-2009/040521
- DE-A1-102013 225 159
- DE-A1-102014 225 190
- JP-A- 2003 331 903
- TOBIAS JANOSCHKA ET AL: "An aqueous, polymer-based redox-flow battery using non-corrosive, safe, and low-cost materials", NATURE, Bd. 527, Nr. 7576, 21. Oktober 2015 (2015-10-21), Seiten 78-81, XP055338491, ISSN: 0028-0836, DOI: 10.1038/nature15746

## Beschreibung

Die vorliegende Erfindung betrifft einen Batteriespeicher für eine Redox-Flow-Batterie, eine Redox-Flow-Batterie mit einem solchen Batteriespeicher und ein Verfahren zum Herstellen eines Batteriespeichers für eine Redox-Flow-Batterie. Weiter betrifft die Erfindung die Verwendung einer Kaverne, insbesondere einer Salzstockkaverne, als Batteriespeicher.

Eine Redox-Flow-Batterie, auch Flussbatterie genannt, ist ein elektrochemischer Energiespeicher. Der klassische Aufbau einer Redox-Flow-Batterie besteht aus einer galvanischen Zelle und zwei separaten Elektrolytkreisläufen. Die galvanische Zelle ist durch eine Membran in zwei Halbzellen geteilt. Jede Halbzelle wird von einem separaten Elektrolytkreislauf gespeist, wobei der jeweilige Elektrolyt in Tanks bevorratet und über Pumpen der jeweiligen Halbzelle zugeführt wird.

Eine erste Halbzelle wird von einem Anolyt und eine zweite Halbzelle wird von einem Katholyt durchströmt. Es findet ein Ladungsaustausch zwischen den Elektrolyten statt. Beim Laden und Entladen werden Anolyt und Katholyt reduziert bzw. oxidiert, um elektrische Energie in chemische Energie umzuwandeln und umgekehrt.

Eine solche Redox-Flow-Batterie ist beispielsweise aus dem Dokument DE 10 2012 016 317 A1 bekannt.

Die Speicherkapazität einer Redox-Flow-Batterie ist durch das Lagervolumen der Tanks zur Bevorratung der Elektrolyte begrenzt. In bekannten Systemen werden eine Vielzahl von Tankcontainern zur Bevorratung von Elektrolyt miteinander vernetzt. Weitere Container dienen zur Aufnahme einer Membrananlage, die als galvanische Zelle zur Energiezufuhr und Energieabgabe dient. Mit steigender Kapazität einer Redox-Flow-Batterie steigt in solchen Systemen daher die Anzahl der notwendigen Container zur Bevorratung der Elektrolyte und damit auch die Komplexität der Anlagentechnik. Weiterer relevanter Stand der Technik ist in der Druckschrift WO 2009/040521 A1 beschrieben.

Aufgabe der vorliegenden Erfindung ist es daher, einen Batteriespeicher für eine Redox-Flow-Batterie, eine Redox-Flow-Batterie mit einem solchen Batteriespeicher und ein Verfahren zum Herstellen eines Batteriespeichers für eine Redox-Flow-Batterie anzugeben, welche die voranstehend beschriebenen Nachteile nicht oder zumindest in geringerem Maße aufweisen und insbesondere in einfacher und kostengünstiger Weise eine Redox-Flow-Batterie mit hoher Speicherkapazität ermöglichen. Weiter soll eine Verwendung für eine Kaverne angegeben werden.

Die voranstehend beschriebene Aufgabe wird durch einen Batteriespeicher für eine Redox-Flow-Batterie nach Anspruch 1, eine Redox-Flow-Batterie nach Anspruch 5, ein Verfahren zum Herstellen eines Batteriespeichers für eine Redox-Flow-Batterie nach Anspruch 12 sowie eine Verwendung einer Kaverne nach Anspruch 13 gelöst. Vorteilhafte Ausgestaltungen der Erfindung ergeben sich aus den abhängigen Ansprüchen und der nachstehenden Beschreibung.

Dadurch, dass der Elektrolyt in einer Kaverne aufgenommen ist, lassen sich auch große Mengen von Elektrolyt in einem einzigen Speicher bzw. einer einzigen Kavität bevorraten. Beispielsweise können hierzu vormals als Gaskavernen vorgesehene Kavernen genutzt werden. Es sind daher keine oberirdischen Container oder Tanks zur Speicherung von Elektrolyt erforderlich. Dadurch kann der Anlagen- und Kostenaufwand zur Bevorratung von Elektrolyt für Redox-Flow-Batterien mit hoher Kapazität reduziert werden, da kein weit verzweigtes Rohrsystem zur Vernetzung einer Vielzahl von Tanks oder Containern erforderlich ist.

Wenn vorliegend von einer Kaverne gesprochen wird, so handelt es sich dabei um einen unterirdischen Hohlraum, der beispielsweise mehrere hundert Meter unter der Erdoberfläche angeordnet sein kann.

Der Elektrolyt, der in dem Batteriespeicher aufgenommen ist, ist beispielsweise ein Katholyt oder ein Anolyt für eine Redox-Flow-Batterie.

Der Elektrolyt kann beispielsweise eine Speicherkapazität bzw. eine Energiedichte von 25 Wattstunden pro Liter (W^{∗}h/l) aufweisen.

Nach einer Weiterbildung des Batteriespeichers ist vorgesehen, dass die Kaverne eine Salzstockkaverne ist. Eine solche Salzstockkaverne kann in bekannter Weise durch Ausspülen bzw. Aussolen einer Salzschicht im Untergrund geschaffen worden sein. So kann mit bekannten Verfahren ein unterirdischer Hohlraum geschaffen werden, der als Batteriespeicher zur Bevorratung von Elektrolyt für eine Redox-Flow-Batterie dient. Alternativ kann eine bereits bestehende Kaverne, die ursprünglich zur Gasspeicherung vorgesehen war, zur Bevorratung von Elektrolyt für eine Redox-Flow-Batterie verwendet werden.

Gemäß alternativen Ausgestaltungen kann vorgesehen sein, dass die Kaverne zumindest abschnittsweise, insbesondere vollständig durch Gestein, insbesondere Granit, begrenzt ist.

Erfindungsgemäß ist vorgesehen, dass der Elektrolyt Sole und Polymer aufweist, insbesondere flüssiges Polymer. Ein solcher Elektrolyt hat gegenüber säurebasierten Elektrolyten den Vorteil einer höheren Umweltverträglichkeit.

Durch die Verwendung von Sole und Polymer als Elektrolyt kann gewährleistet werden, dass beispielsweise bestehende Salzstockkavernen, die ursprünglich zur Bevorratung von Gas vorgesehen waren, ohne eine zusätzliche Belastung der Umwelt als Batteriespeicher für eine Redox Flow-Batterie umfunktioniert werden können. So kann beispielsweise eine bereits mit Sole geflutete Gaskaverne an einen Kreislauf einer Redox-Flow-Batterie angeschlossen werden, wobei die Sole beim Zirkulieren mit Polymer versetzt werden kann. Das Anreichern der Sole mit Polymer kann durch oberirdische Zugabe von Polymer zur Sole erfolgen. Auf diese Weise können mit vergleichsweise geringem Aufwand große Speicherkapazitäten als Batteriespeicher für eine Redox-Flow-Batterie erschlossen werden.

Wenn vorliegend von Sole gesprochen wird, so handelt es sich dabei um wässrige, gesättigte Salzlösung.

Nach einer Weiterbildung des Batteriespeichers ist vorgesehen, dass die Kavität ein Volumen (Hohlraumvolumen) in einem Bereich von einschließlich 70.000 m³ (siebzigtausend Kubikmeter) bis 500.000 m³ (fünfhunderttausend Kubikmeter) oder 500.000 m³ (fünfhunderttausend Kubikmeter) bis 800.000 m³ (achthunderttausend Kubikmeter) aufweist, insbesondere 600.000 m³ aufweist.

Bei diesen Volumina handelt es sich um Größenordnungen, in denen üblicherweise beispielsweise Salzstockkavernen für die Gasspeicherung hergestellt werden. So kann in einem einzigen Batteriespeicher bei geringem Anlagenaufwand große Mengen an Elektrolyt gespeichert werden. Beispielsweise kann eine Kaverne mit einem Volumen von ca. 600.000 m³ (sechshunderttausend Kubikmeter) als Batteriespeicher zur Bevorratung von Elektrolyt dienen.

Es können neue Salzstockkavernen als Batteriespeicher für eine Redox-Flow-Batterie geschaffen werden oder bestehende Salzstockkavernen zur Gasspeicherung als Batteriespeicher für eine Redox-Flow-Batterie umfunktioniert werden. Es versteht sich, dass neben Salzstockkavernen auch weitere Kavernenarten, wie zum Beispiel Granitkavernen oder dergleichen, für die Bevorratung von Elektrolyt für eine Redox-Flow-Batterie geeignet sein können.

Je nach Beschaffenheit der Erdschichten kann vorgesehen sein, dass das Volumen einer Kaverne, die als Batteriespeicher für eine Redox-Flow-Batterie dienen soll, 100.000 m³ (hunderttausend Kubikmeter) bis 1.000.000 Million m³ (eine Million Kubikmeter) beträgt. Soweit es die geologischen und technischen Randbedingungen ermöglichen, ist das Volumen bzw. das Hohlraumvolumen einer Kaverne, die als Batteriespeicher für eine Redox-Flow-Batterie dienen soll, frei skalierbar, und kann auch über eine Million Kubikmeter Elektrolyt fassen.

Gemäß einem weiteren Aspekt betrifft die Erfindung eine Redox-Flow-Batterie, mit einer oder mehreren Redox-Flow-Zellen und wenigstens zwei Batteriespeichern zur Versorgung der einen oder mehreren Redox-Flow-Zellen mit Elektrolyt. Wenigstens einer der Batteriespeicher ist in erfindungsgemäßer Weise ausgebildet.

Während der Elektrolyt wenigstens eines Kreislaufs einer solchen Redox-Flow-Batterie in einer Kaverne unterirdisch bevorratet wird, beispielsweise ein Katholyt, kann der Elektrolyt eines zweiten Kreislaufs der Redox-Flow-Batterie, beispielsweise ein Anolyt, in konventioneller Weise oberirdisch in Containern bzw. Tanks bevorratet werden. Insgesamt reduziert sich bereits durch die Bevorratung wenigstens eines Elektrolyten einer Redox-Flow-Batterie im Untergrund die oberirdisch erforderliche Stellfläche und Anlagentechnik für oberirdisch vernetzte Tanks bzw. Container.

Wenn vorliegend von einer Redox-Flow-Zelle gesprochen wird, so handelt es sich dabei um eine galvanische Zelle, die durch eine oder mehrere Membranen in wenigstens zwei Halbzellen geteilt ist. Eine erste Halbzelle wird von einem Anolyt und eine zweite Halbzelle wird von einem Katholyt durchströmt. Es findet ein Ladungsaustausch zwischen den Elektrolyten statt. Beim Laden und Entladen werden Anolyt und Katholyt reduziert bzw. oxidiert, um elektrische Energie in chemische Energie umzuwandeln und umgekehrt.

Nach einer Weiterbildung der Redox-Flow-Batterie ist vorgesehen, dass zwei oder mehr Batteriespeicher zur Versorgung der einen oder mehreren Redox-Flow-Zellen mit Elektrolyt vorgesehen sind, wobei wenigstens zwei Batteriespeicher in erfindungsgemäße Weise ausgebildet sind. Gemäß dieser Ausgestaltung sind wenigstens zwei Batteriespeicher zur Bevorratung von Elektrolyt in Kavernen unterirdisch angeordnet. Auf diese Weise lassen sich große Vorratsvolumina und Speicherkapazitäten einer Redox-Flow-Batterie abbilden, während der Anlagenaufwand geringgehalten wird. Beispielsweise kann ein erster erfindungsgemäßer Batteriespeicher ein Anolyt und ein zweiter, von dem ersten Batteriespeicher separater Batteriespeicher ein Katholyt bevorraten.

Nach einer alternativen Ausgestaltung einer Redox-Flow-Batterie ist vorgesehen, dass die Redox-Flow-Batterie genau zwei Batteriespeicher zur Versorgung der einen oder mehreren Redox-Flow-Zellen mit Elektrolyt vorgesehen sind, wobei die Batteriespeicher in erfindungsgemäßer Weise ausgestaltet sind. Nach dieser Ausgestaltung lässt sich in einfacher Weise eine Redox-Flow-Batterie realisieren, die ein hohes Speichervolumen bzw. eine hohe Speicherkapazität hat, wobei die Anlagentechnik aufgrund der lediglich zwei Batterie- bzw. Elektrolytspeicher geringgehalten werden kann. Beispielsweise können eine Vielzahl von Redox-Flow-Zellen aus genau zwei separaten, unterirdischen Kavernen gespeist und mit Elektrolyt versorgt werden, wobei der erste Batteriespeicher ein Anolyt und der zweite, von dem ersten Batteriespeicher separate Batteriespeicher ein Katholyt bevorratet.

Während die Batteriespeicher zumindest teilweise, bevorzugt ausschließlich unterirdisch in Kavernen realisiert werden können, kann die Anordnung der einen oder mehreren Redox-Flow-Zellen, die auch als Membranstacks bezeichnet werden, bevorzugt oberirdisch sein.

Gemäß einer Weiterbildung der Redox-Flow-Batterie ist vorgesehen, dass eine erste Rohrtour und eine zweite Rohrtour zur Elektrolytzufuhr und zur Elektrolytentnahme in die Kaverne münden, wobei die Rohrtouren insbesondere ineinander verschachtelt sind. So können beispielsweise bestehende Rohrtouren, die noch aus einer voranstehenden Nutzung der Kaverne zur Gasspeicherung bestehen, zur Elektrolytzufuhr und/oder Entnahme weiter genutzt oder modifiziert werden.

Die Rohrtouren können zur platzsparenden Anordnung ineinander verschachtelt sein. Beispielsweise kann die erste Rohrtour in einer zweiten Rohrtour abgehängt sein.

In Bezug auf die Anlagentechnik einer Redox-Flow-Batterie, die ein weitverzweigtes Leitungssystem aus Metall aufweisen kann, ist es von Vorteil, Sole mit Polymer als Elektrolyt zu verwenden, da die Metallrohre durch die Sole nicht angegriffen werden.

Wenn vorliegend davon gesprochen wird, dass die erste und die zweite Rohrtour in die Kaverne münden, bedeutet dies, dass wenigstens ein Rohrende der jeweiligen Rohrtour bis in das Hohlraumvolumen der Kaverne reicht, das zur Bevorratung von Elektrolyt vorgesehen ist.

Gemäß einer Weiterbildung der Redox-Flow-Batterie ist vorgesehen, dass ein Ende der ersten Rohrtour einem Kavernengrund zugeordnet ist und ein Ende der zweiten Rohrtour einem Kavernendach zugeordnet ist.

Während des Batteriebetriebs kann sich beim Lade- oder Entladevorgang der Batterie eine Schichtung des Elektrolyten ergeben. Beispielsweise kann während eines Entladevorgangs geladenes Elektrolyt oberhalb von entladenem Elektrolyt im Bereich des Kavernendachs angeordnet bzw. konzentriert sein, während entladenes Elektrolyt im Bereich des Kavernengrunds angesammelt ist. Während des Entladevorgangs kann daher geladenes Elektrolyt im Dachbereich der Kaverne über die zweite Rohrtour entnommen werden und entladenes Elektrolyt im Bereich des Kavernengrundes über die zweite Rohrtour in die Kaverne zurückgeführt werden.

Die Leistungsabgabefähigkeit und Leistungsaufnahmefähigkeit einer Redox-Flow-Zelle hängt einerseits von der Energiedichte und dem Volumen des Elektrolyten ab und weiterhin von der zu Verfügungen stehenden Membranfläche innerhalb der Redox-Flow-Zellen, über die eine Ladungsaustausch stattfinden kann. Um eine flexible Anpassung der Leistungsaufnahme und Leistungsabgabe der Redox-Flow-Batterie zu erreichen, kann eine Mehrzahl von Redox-Flow-Zellen vorgesehen sein, wobei die Redox-Flow-Zellen in einer Kaskadenschaltung angeordnet sein können. Durch die Kaskadenschaltung können die Redox-Flow-Zellen bedarfsgerecht parallel oder in Reihe zueinander zugeschaltet bzw. aus dem Energiefluss ausgeblendet werden, um den jeweiligen Betriebsbedingungen bezüglich der Energiespeicherung oder der Leistungsabgabe gerecht zu werden.

Die Redox-Flow-Batterie kann eine Kapazität in einem Bereich von einschließlich 12,5 bis 25 Gigawattstunden (GWh) aufweisen. Damit lassen sich mit der vorgeschlagenen Redox-Flow-Batterie Speicherkapazitäten erreichen, die bis hin zu Kernkraftwerkskapazitäten ausgebaut sind.

Die Redox-Flow-Batterie kann als Pufferspeicher für Windenergie- oder Solarenergieanlagen dienen. Dabei ist vorteilhaft, dass bei einer Redox-Flow-Batterie kein Memoryeffekt und keine Schädigung durch Tiefentladung auftritt.

Gemäß einem weiteren Aspekt betrifft die Erfindung ein Verfahren zum Herstellen eines Batteriespeichers für eine Redox-Flow-Batterie, wobei wenigstens die folgenden Verfahrensschritte durchlaufen werden:
- Bereitstellen einer Kavität zur Bevorratung von Elektrolyt, wobei die Kavität eine Kaverne ist;
- Bereitstellen von Elektrolyt in der Kaverne.

In dem Verfahrensschritt "Bereitstellen einer Kavität zur Bevorratung von Elektrolyt, wobei die Kavität eine Kaverne ist", kann beispielsweise auf bereits bestehende Kavernen, die ursprünglich zur Gasspeicherung vorgesehen waren, zurückgegriffen werden. Alternativ kann eine neue Kaverne zur Bevorratung von Elektrolyt mit bekannten Verfahren geschaffen werden, wobei beispielsweise das Aussolen eines Salzstocks erfolgen kann. Die Sole kann dabei in der Kaverne verbleiben und mit Polymer versetzt werden.

Das Zuführen von Elektrolyt in die Kaverne kann nach oder während dem Aussolen der Kaverne erfolgen. So kann beispielsweise eine bereits mit Sole geflutete Salzstockkaverne sukzessive in einem zirkulierenden Solekreislauf mit Polymer, insbesondere flüssigem Polymer, versetzt werden, um das für eine Redox-Flow-Batterie erforderliche Elektrolyt bereitzustellen.

Alternativ kann eine Gaskaverne bereits unmittelbar mit einem Elektrolyten aus Sole und Polymer aufgefüllt bzw. geflutet werden und so als Batteriespeicher für eine Redox-Flow-Batterie genutzt werden.

Gemäß einem letzten Aspekt betrifft die Erfindung eine Verwendung einer Kaverne, insbesondere einer Salzstockkaverne, als Batteriespeicher zur Aufnahme von Elektrolyt für eine Redox-Flow-Batterie. Dabei kann es sich insbesondere um eine Salzstockkaverne handeln, die ursprünglich zur Gasspeicherung vorgesehen war oder verwendet worden ist.

Nachfolgend wird die Erfindung anhand einer Ausführungsbeispiele darstellenden Zeichnung näher beschrieben. Es zeigen jeweils schematisch:
Fig. 1 eine erfindungsgemäße Redox-Flow-Batterie mit einem erfindungsgemäßen Batteriespeicher.
Fig. 2 einen erfindungsgemäßen Batteriespeicher für eine Redox-Flow-Batterie.

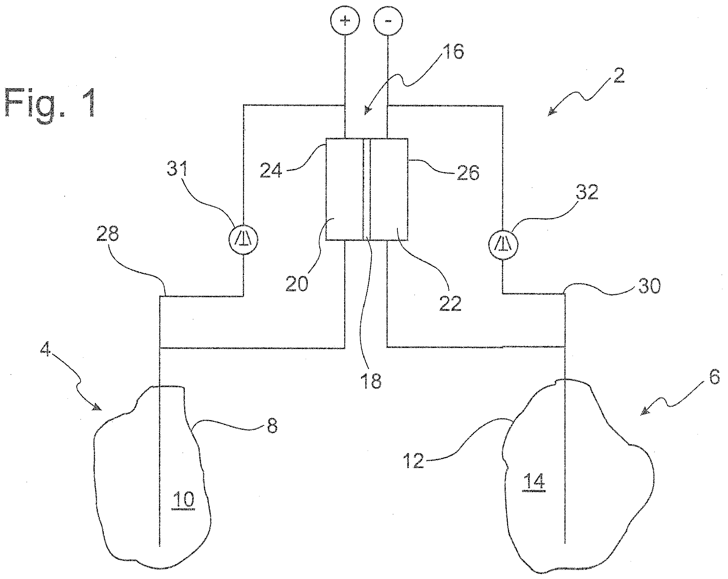

In Fig. 1 ist eine Redox-Flow-Batterie 2 dargestellt. Die Redox-Flow-Batterie 2 hat einen ersten Batteriespeicher 4 und einen zweiten Batteriespeicher 6. Der erste Batteriespeicher 4 weist eine Kavität 8 auf, in der Elektrolyt 10 bevorratet ist. Die Kavität 8 ist eine Kaverne 8.

Der zweite Batteriespeicher 6 weist eine Kavität 12 auf, in der Elektrolyt 14 bevorratet ist. Die Kavität 12 ist eine Kaverne 12.

Der Elektrolyt 10 weist Sole und flüssiges Polymer auf. Der Elektrolyt 14 weist ebenfalls Sole und flüssiges Polymer auf. Der Elektrolyt 10 bildet vorliegend den Anolyt. Der Elektrolyt 14 bildet den Katholyt.

Die Kaverne 8 weist ein Hohlraumvolumen zur Aufnahme von Elektrolyt 10 von 600.000 m³ auf. Die Kaverne 12 weist ein Hohlraumvolumen zur Aufnahme von Elektrolyt 14 von 600.000 m³ auf.

Die Redox-Flow-Batterie 2 hat eine Redox-Flow-Zelle 16. Die Redox-Flow-Zelle 16 ist durch eine Membran 18 in eine erste Halbzelle 20 und eine zweite Halbzelle 22 unterteilt. Der ersten Halbzelle 20 ist eine erste Elektrode 24 zugeordnet. Der zweiten Halbzelle 22 ist eine zweite Elektrode 26 zugeordnet. Über die Elektroden 24, 26 kann der Redox-Flow-Zelle 16 elektrische Energie entnommen und zugeführt werden.

Die erste Halbzelle 20 ist über Rohrleitungen 28 mit dem ersten Batteriespeicher 4 verbunden. Die zweite Halbzelle 22 ist über Rohrleitungen 30 mit dem zweiten Batteriespeicher 6 verbunden. Der Elektrolyt 10 wird mithilfe einer Pumpe 31 durch die erste Halbzelle 20 gefördert. Der Elektrolyt 12 wird mithilfe einer Pumpe 32 durch die zweite Halbzelle 22 gefördert. Auf diese Weise werden zwei separate Elektrolytkreisläufe gebildet.

Die Redox-Flow-Batterie 2 kann eine Mehrzahl von Redox-Flow-Zellen 16 aufweisen, die in einer Kaskadenschaltung zueinander verschaltet sind. Die vorliegende Redox-Flow-Batterie 2 weist eine Kapazität von 15 Gigawattstunden (GWh) auf.

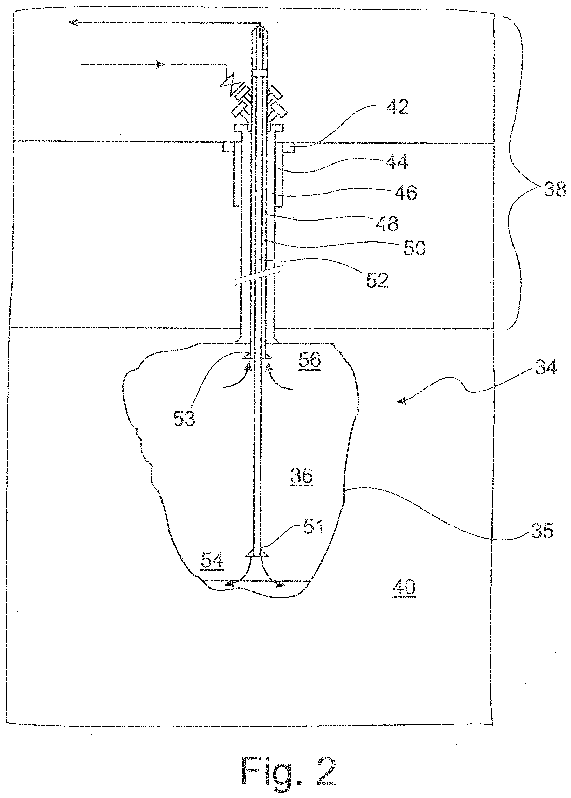

Fig. 2 zeigt einen Batteriespeicher 34, der als Batteriespeicher 4 oder 6 der in Figur 1 gezeigten Redox-Flow-Batterie 2 dienen kann. In dem Batteriespeicher 34 ist Elektrolyt 36 aufgenommen. Der Elektrolyt 36 kann über ein Fördersystem 38 dem Batteriespeicher 34 entnommen werden oder diesem zugeführt werden.

Der Batteriespeicher 34 hat vorliegend eine Salzstockkaverne 35, die durch Aussolen in einen Salzstock 40 eingebracht worden ist und eine Kavität 35 zur Aufnahme von Elektrolyt 36 bildet.

Das Fördersystem 38 weist ein Standrohr 42, eine Ankerrohrtour 44, eine Futterrohrtour 46, einen Schutzstrang 48, einen Elektrolytentnahmestrang 50 und einen Elektrolytrückförderstrang 52 auf.

Der Elektrolytrückförderstrang 52 ist eine erste Rohrtour 52, die in die Salzstockkaverne 35 mündet. Dabei ist ein erstes Ende 51 der ersten Rohrtour 52 einem Kavernengrund 54 zugeordnet.

Der Elektrolytentnahmestrang 50 ist eine zweite Rohrtour 50, die in die Salzstockkaverne 35 mündet. Dabei ist ein erstes Ende 53 der zweiten Rohrtour 50 einem Kavernendach 56 zugeordnet.

Beim Entladevorgang einer Redox-Flow-Batterie, die beispielsweise als Redox-Flow-Batterie 2 gemäß Fig. 1 ausgestaltet sein kann, wird über die zweite Rohrtour 50 im Bereich des Kavernendachs 56 geladenes Elektrolyt 36 entnommen und einer oder mehreren Redox-Flow-Zellen zugeführt.

Über die erste Rohrtour 52 kann entladenes Elektrolyt 36 zum Kavernengrund 54 der Salzstockkaverne 35 zurückgefördert werden, nachdem die chemische Energie des Elektrolyten 36 in einer oder mehreren Redox-Flow-Zellen in elektrische Energie umgewandelt worden ist. Somit ergibt sich innerhalb der Salzstockkaverne 35 eine Schichtung, wobei geladenes Elektrolyt 36 dem Kavernendach 56 und entladenes Elektrolyt 36 dem Kavernengrund 54 zugeordnet bzw. dort konzentriert ist.

Die Pumpen 31, 32 können in zwei Richtungen betrieben werden, so dass auch die Elektrolytkreisläufe in zwei Richtungen betrieben werden können. In diesem Fall ist die zweite Rohrtour 50 ein Elektrolytrückförderstrang und die erste Rohrtour 52 der Elektrolytentnahmestrang. Die Pumpen 31, 32 können innerhalb oder außerhalb der Kavitäten 8, 10 angeordnet sein.

Vorliegend wird daher eine Salzstockkaverne 35 als Batteriespeicher 34 verwendet, in dem in der Salzstockkaverne 35 ein Elektrolyt 36 bevorratet wird, das zum Zuführen zu einer Redox-Flow-Batterie vorgesehen ist.

Der Batteriespeicher 34 kann einerseits dadurch hergestellt werden, dass eine bereits bestehende Gaskaverne, die in einem Salzstock durch Aussolen erzeugt worden ist, zu einem Batteriespeicher zur Bevorratung von Elektrolyt umfunktioniert wird. Beispielsweise kann es sich bei dem Batteriespeicher 34 um eine bereits geflutete, mit Sole gefüllte Gasstockkaverne handeln. Der Sole kann dann in einem Kreisprozess sukzessive Polymer zugeführt werden, um ein Elektrolyt für eine Redox-Flow-Batterie in der Kaverne bereitzustellen.

Alternativ kann eine Kaverne eigens für eine Verwendung als Batteriespeicher für eine Redox-Flow-Batterie in einen Salzstock eingearbeitet werden.

### Bezugszeichen

- 2: Redox-Flow-Batterie
- 4: erster Batteriespeicher
- 6: zweiter Batteriespeicher
- 8: Kavität / Kaverne
- 10: Elektrolyt / Anolyt
- 12: Kavität / Kaverne
- 14: Elektrolyt / Katholyt
- 16: Redox-Flow-Zelle
- 18: Membran
- 20: erste Halbzelle
- 22: zweite Halbzelle
- 24: erste Elektrode
- 26: zweite Elektrode
- 28: Rohrleitungen
- 30: Rohrleitungen
- 31: Pumpe
- 32: Pumpe
- 34: Batteriespeicher
- 35: Salzstockkaverne / Kavität
- 36: Elektrolyt
- 38: Fördersystem
- 40: Salzstock
- 42: Standrohr
- 44: Ankerrohrtour
- 46: Futterrohrtour
- 48: Schutzstrang
- 50: Elektrolytentnahmestrang / zweite Rohrtour
- 51: erstes Ende der ersten Rohrtour
- 52: Elektrolytrückförderstrang / erste Rohrtour
- 53: erstes Ende der zweiten Rohrtour
- 54: Kavernengrund
- 56: Kavernendach

## Patentansprüche

1. Batteriespeicher für eine Redox-Flow-Batterie, mit einer Kavität (8, 12, 35), in der Elektrolyt (10, 14, 36) bevorratet ist, wobei der Elektrolyt (10, 14, 36) zum Zuführen zu einer oder mehreren Redox-Flow-Zellen (16) vorgesehen ist, wobei die Kavität (8, 12, 35) eine Kaverne (8, 12, 35) ist und wobei der Elektrolyt (10, 14, 36) Sole und Polymer aufweist.

2. Batteriespeicher nach Anspruch 1, **dadurch gekennzeichnet, dass** die Kaverne (35) eine Salzstockkaverne (35) ist.

3. Batteriespeicher nach einem der Ansprüche 1 oder 2, **dadurch gekennzeichnet, dass** der Elektrolyt (10, 14, 36) Sole und flüssiges Polymer aufweist.

4. Batteriespeicher nach einem der voranstehenden Ansprüche, **dadurch gekennzeichnet, dass** die Kavität (8, 12, 35) ein Volumen in einem Bereich von einschließlich 70.000 m³ bis 500.000 m³ oder 500.000 m³ bis 800.000 m³ aufweist, insbesondere 600.000 m³ aufweist.

5. Redox-Flow-Batterie, mit
- einer oder mehreren Redox-Flow-Zellen (16) und
- wenigstens zwei Batteriespeichern (4, 6, 34) zur Versorgung der einen oder mehreren Redox-Flow-Zellen (16) mit Elektrolyt (10, 14, 36), wobei wenigstens einer der Batteriespeicher (4, 6, 34) eine Kavität (8, 12, 35) aufweist, in der Elektrolyt (10, 14, 36) bevorratet ist, wobei der Elektrolyt (10, 14, 36) zum Zuführen zu den ein- oder mehreren Redox-Flow-Zellen (16) vorgesehen ist, **dadurch gekennzeichnet, dass**
- die Kavität (8, 12, 35) eine Kaverne (8, 12, 35) ist, wie eine Salzstockkaverne (35), eine Granitkaverne oder dergleichen.

6. Redox-Flow-Batterie nach Anspruch 5, **dadurch gekennzeichnet, dass**
- zwei oder mehr Batteriespeicher (4, 6, 34) zur Versorgung der einen oder mehreren Redox-Flow-Zellen (16) mit Elektrolyt (10, 14, 36) vorgesehen sind, wobei wenigstens zwei Batteriespeicher (4, 6, 34) jeweils eine Kavität (8, 12, 35) aufweisen, in der Elektrolyt (10, 14, 36) bevorratet ist, wobei der Elektrolyt (10, 14, 36) zum Zuführen zu den ein- oder mehreren Redox-Flow-Zellen (16) vorgesehen ist, und wobei die jeweilige Kavität (8, 12, 35) eine Kaverne (8, 12, 35) ist, wie eine Salzstockkaverne (35), eine Granitkaverne oder dergleichen,
und/oder
- genau zwei Batteriespeicher (4, 6, 34) zur Versorgung der einen oder mehreren Redox-Flow-Zellen (16) mit Elektrolyt (10, 14, 36) vorgesehen sind, wobei die Batteriespeicher (4, 6, 34) jeweils eine Kavität (8, 12, 35) aufweisen, in der Elektrolyt (10, 14, 36) bevorratet ist, wobei der Elektrolyt (10, 14, 36) zum Zuführen zu den ein- oder mehreren Redox-Flow-Zellen (16) vorgesehen ist, und wobei die jeweilige Kavität (8, 12, 35) eine Kaverne (8, 12, 35) ist, wie eine Salzstockkaverne (35), eine Granitkaverne oder dergleichen,.

7. Redox-Flow-Batterie nach einem der Ansprüche 5 oder 6, **dadurch gekennzeichnet, dass** eine erste Rohrtour (52) und eine zweite Rohrtour (50) zur Elektrolytzufuhr und zur Elektrolytentnahme in die Kaverne (8, 12, 35) münden, wobei die Rohrtouren (50, 52) insbesondere ineinander verschachtelt sind, wobei insbesondere ein Ende (51) der ersten Rohrtour einem Kavernengrund (54) zugeordnet ist und ein Ende (53) der zweiten Rohrtour (50) einem Kavernendach (56) zugeordnet ist.

8. Redox-Flow-Batterie nach einem der voranstehenden Ansprüche 5 bis 7, **dadurch gekennzeichnet, dass**
- eine Mehrzahl von Redox-Flow-Zellen (16) vorgesehen sind, wobei die Redox-Flow-Zellen (16) in einer Kaskadenschaltung angeordnet sind,
und/oder
- die Redox-Flow-Batterie (2) eine Kapazität in einem Bereich von einschließlich 12,5 bis 25 Gigawattstunden aufweist, insbesondere 15 Gigawattstunden.

9. Redox-Flow-Batterie nach einem der Ansprüche 5 bis 8, **dadurch gekennzeichnet, dass** die Kaverne (35) eine Salzstocckaverne (35) ist.

10. Redox-Flow-Batterie nach einem der Ansprüche 5 bis 9, **dadurch gekennzeichnet, dass** der Elektrolyt (10, 14, 36) Sole und Polymer aufweist, insbesondere flüssiges Polymer.

11. Redox-Flow-Batterie nach einem der voranstehenden Ansprüche 5 bis 10, **dadurch gekennzeichnet, dass** die Kavität (8, 12, 35) ein Volumen in einem Bereich von einschließlich 70.000 m³ bis 500.000 m³ oder 500.000 m³ bis 800.000 m³ aufweist, insbesondere 600.000 m³ aufweist.

12. Verfahren zum Herstellen eines Batteriespeichers für eine Redox-Flow-Batterie, wobei wenigstens die folgenden Verfahrensschritte durchlaufen werden:
- Bereitstellen einer Kavität (8, 12, 35) zur Bevorratung von Elektrolyt (10, 14, 36), wobei die Kavität (8, 12, 35) eine Kaverne (8, 12, 35) ist;
- Bereitstellen von Elektrolyt (10, 14, 36) in der Kaverne (8, 12, 35), **dadurch gekennzeichnet,**
- **dass** der Elektrolyt (10, 14, 36) Sole und Polymer aufweist.

13. Verwendung einer Kaverne, insbesondere einer Salzstockkaverne, als Batteriespeicher (4, 6, 34) zur Aufnahme von Elektrolyt (10, 14, 36) für eine Redox-Flow-Batterie (2), **dadurch gekennzeichnet, dass** der Elektrolyt (10, 14, 36) Sole und Polymer aufweist.

## Claims

1. A battery bank for a redox flow battery having a cavity (8, 12, 35) in which electrolyte (10, 14, 36) is stored, wherein the electrolyte (10, 14, 36) is provided for supply to one or more redox flow cells (16), wherein the cavity (8, 12, 35) is a cavern (8, 12, 35) and wherein the electrolyte (10, 14, 36) comprises brine and polymer.

2. The battery bank as claimed in claim 1, **characterized in that** the cavern (35) is a salt dome cavern (35).

3. The battery bank as claimed in one of claims 1 or 2, **characterized in that** the electrolyte (10, 14, 36) comprises brine and liquid polymer.

4. The battery bank as claimed in one of the preceding claims, **characterized in that** the cavity (8, 12, 35) has a volume in an inclusive range from 70,000 m³ to 500,000 m³ or 500,000 m³ to 800,000 m³, in particular 600,000 m³.

5. A redox flow battery having
- one or more redox flow cells (16) and
- at least two battery banks (4, 6, 34) for supplying the one or more redox flow cells (16) with electrolyte (10, 14, 36), wherein at least one of the battery banks (4, 6, 34) has a cavity (8, 12, 35) in which the electrolyte (10, 14, 36) is stored, wherein the electrolyte (10, 14, 36) is provided for supply to the one or more redox flow cells (16), **characterized in that** the cavity (8, 12, 35) is a cavern (8, 12, 35), such as a salt dome cavern (35), a granite cavern or the like.

6. The redox flow battery as claimed in claim 5, **characterized in that**
- two or more battery banks (4, 6, 34) are provided for supplying the one or more redox flow cells (16) with electrolyte (10, 14, 36), wherein at least two battery banks (4, 6, 34) in each case have a cavity (8, 12, 35) in which electrolyte (10, 14, 36) is stored, wherein the electrolyte (10, 14, 36) is provided for supply to the one or more redox flow cells (16), and wherein the respective cavity (8, 12, 35) is a cavern (8, 12, 35), such as a salt dome cavern (35), a granite cavern or the like,
and/or
- precisely two battery banks (4, 6, 34) are provided for supplying the one or more redox flow cells (16) with electrolyte (10, 14, 36), wherein the battery banks (4, 6, 34) in each case have a cavity (8, 12, 35) in which electrolyte (10, 14, 36) is stored, wherein the electrolyte (10, 14, 36) is provided for supply to the one or more redox flow cells (16), and wherein the respective cavity (8, 12, 35) is a cavern (8, 12, 35), such as a salt dome cavern (35), a granite cavern or the like.

7. The redox flow battery as claimed in one of claims 5 or 6, **characterized in that** a first pipe string (52) and a second pipe string (50) for supplying and withdrawing electrolyte open into the cavern (8, 12, 35), wherein the pipe strings (50, 52) are in particular nested in one another, wherein in particular one end (51) of the first pipe string is associated with a cavern floor (54) and one end (53) of the second pipe string (50) is associated with a cavern roof (56).

8. The redox flow battery as claimed in one of preceding claims 5 to 7, **characterized in that**
- a plurality of redox flow cells (16) are provided, wherein the redox flow cells (16) are arranged in a cascade system,
and/or
- the redox flow battery (2) has a capacity in a range from 12.5 to 25 gigawatt hours (GWh) inclusive, in particular 15 gigawatt hours.

9. The redox flow battery as claimed in one of claims 5 to 8, **characterized in that** the cavern (35) is a salt dome cavern (35).

10. The redox flow battery as claimed in one of claims 5 to 9, **characterized in that** the electrolyte (10, 14, 36) comprises brine and polymer, in particular liquid polymer.

11. The redox flow battery as claimed in one of preceding claims 5 to 10, **characterized in that** the cavity (8, 12, 35) has a volume in an inclusive range from 70,000 m³ to 500,000 m³ or 500,000 m³ to 800,000 m³, in particular 600,000 m³.

12. A method for producing a battery bank for a redox flow battery, wherein at least the following method steps are carried out:
- provision of a cavity (8, 12, 35) for storing electrolyte (10, 14, 36), wherein the cavity (8, 12, 35) is a cavern (8, 12, 35);
- provision of electrolyte (10, 14, 36) in the cavern (8, 12, 35), **characterized in that**
- the electrolyte (10, 14, 36) comprises brine and polymer.

13. Use of a cavern, in particular a salt dome cavern, as a battery bank (4, 6, 34) for accommodating electrolyte (10, 14, 36) for a redox flow battery (2), **characterized in that** the electrolyte (10, 14, 36) comprises brine and polymer.

## Revendications

1. Réservoir de batterie pour une batterie à flux rédox, comprenant une cavité (8, 12, 35) dans laquelle est stocké l'électrolyte (10, 14, 36), l'électrolyte (10, 14, 36) étant conçu pour être acheminé à une ou plusieurs cellules à flux rédox (16), la cavité (8, 12, 35) étant une caverne (8, 12, 35) et l'électrolyte (10, 14, 36) comprenant de la saumure et un polymère.

2. Réservoir de batterie selon la revendication 1, **caractérisé en ce que** la caverne (35) est une caverne à dôme de sel (35).

3. Réservoir de batterie selon la revendication 1 ou 2, **caractérisé en ce que** l'électrolyte (10, 14, 36) comprenant de la saumure et un polymère liquide.

4. Réservoir de batterie selon l'une des revendications précédentes, **caractérisé en ce que** la cavité (8, 12, 35) possède un volume dans une plage de 70 000 m³ à 500 000 m³ inclus ou de 500 000 m³ à 800 000 m³ inclus, notamment de 600 000 m³.

5. Batterie à flux rédox, comprenant
- une ou plusieurs cellules à flux rédox (16) et
- au moins deux réservoirs de batterie (4, 6, 34) destinés à alimenter la ou les plusieurs cellules à flux rédox (16) avec un électrolyte (10, 14, 36), au moins l'un des réservoirs de batterie (4, 6, 34) comprenant une cavité (8, 12, 35) dans laquelle est stocké l'électrolyte (10, 14, 36), l'électrolyte (10, 14, 36) étant conçu pour être acheminé à une ou plusieurs cellules à flux rédox (16), **caractérisée en ce que**
- la cavité (8, 12, 35) est une caverne (8, 12, 35), comme une caverne à dôme de sel (35), une caverne de granit ou similaire.

6. Batterie à flux rédox selon la revendication 5, **caractérisée en ce que**
- deux réservoirs de batterie (4, 6, 34) ou plus sont présents pour l'alimentation en électrolyte (10, 14, 36) de l'une ou des plusieurs cellules à flux rédox (16), au moins deux réservoirs de batterie (4, 6, 34) comprenant respectivement une cavité (8, 12, 35) dans laquelle est stocké l'électrolyte (10, 14, 36), l'électrolyte (10, 14, 36) étant conçu pour être acheminé à l'une ou aux plusieurs cellules à flux rédox (16), et la cavité (8, 12, 35) respective étant une caverne (8, 12, 35), comme une caverne à dôme de sel (35), une caverne de granit ou similaire,
et/ou
- exactement deux réservoirs de batterie (4, 6, 34) sont présents pour l'alimentation en électrolyte (10, 14, 36) de l'une ou des plusieurs cellules à flux rédox (16), les réservoirs de batterie (4, 6, 34) comprenant respectivement une cavité (8, 12, 35) dans laquelle est stocké l'électrolyte (10, 14, 36), l'électrolyte (10, 14, 36) étant conçu pour être acheminé à l'une ou aux plusieurs cellules à flux rédox (16), et la cavité (8, 12, 35) respective étant une caverne (8, 12, 35), comme une caverne à dôme de sel (35), une caverne de granit ou similaire.

7. Batterie à flux rédox selon l'une des revendications 5 ou 6, **caractérisée en ce qu'**un premier trajet tubulaire (52) et un deuxième trajet tubulaire (50) destinés à l'acheminement d'électrolyte et au prélèvement d'électrolyte débouchent dans la caverne (8, 12, 35), les trajets tubulaires (50, 52) étant notamment imbriqués l'un dans l'autre, une extrémité (51) du premier trajet tubulaire étant notamment associée à un plancher de caverne (54) et une extrémité (53) du deuxième trajet tubulaire (50) étant associée à un plafond de caverne (56) .

8. Batterie à flux rédox selon l'une des revendications 5 à 7, **caractérisée en ce que**
- une pluralité de cellules à flux rédox (16) sont présentes, les cellules à flux rédox (16) étant disposées en un circuit en cascade,
et/ou
- la batterie à flux rédox (2) présente une capacité dans une plage de 12,5 à 25 gigawattheures inclus, notamment de 15 gigawattheures.

9. Batterie à flux rédox selon l'une des revendications 5 à 8, **caractérisée en ce que** la caverne (35) est une caverne à dôme de sel (35).

10. Batterie à flux rédox selon l'une des revendications 5 à 9, **caractérisée en ce que** l'électrolyte (10, 14, 36) comprend de la saumure et un polymère, notamment un polymère liquide.

11. Batterie à flux rédox selon l'une des revendications 5 à 10, **caractérisée en ce que** la cavité (8, 12, 35) possède un volume dans une plage de 70 000 m³ à 500 000 m³ inclus ou de 500 000 m³ à 800 000 m³ inclus, notamment de 600 000 m³.

12. Procédé de fabrication d'un réservoir de batterie pour une batterie à flux rédox, au moins les étapes suivantes étant exécutées :
- fourniture d'une cavité (8, 12, 35) destinée au stockage d'électrolyte (10, 14, 36), la cavité (8, 12, 35) étant une caverne (8, 12, 35) ;
- fourniture d'un électrolyte (10, 14, 36) dans la caverne (8, 12, 35), **caractérisé en ce**
- **que** l'électrolyte (10, 14, 36) comprend de la saumure et un polymère.

13. Utilisation d'une caverne, notamment d'une caverne à dôme de sel, en tant que réservoir de batterie (4, 6, 34) destiné à recevoir de l'électrolyte (10, 14, 36) pour une batterie à flux rédox (2), **caractérisée en ce que** l'électrolyte (10, 14, 36) comprend de la saumure et un polymère.
